(19) Europäisches Patentamt
European Patent Office
Office européen des brevets

(11) Veröffentlichungsnummer : **0 077 025**
**B1**

(12) # EUROPÄISCHE PATENTSCHRIFT

(45) Veröffentlichungstag der Patentschrift : **24.04.85**

(51) Int. Cl.[4] : **C 09 B 29/32**, C 09 B 41/00

(21) Anmeldenummer : **82109254.1**

(22) Anmeldetag : **07.10.82**

(54) **Verfahren zur Herstellung eines Azopigments.**

(30) Priorität : **09.10.81 DE 3140141**

(43) Veröffentlichungstag der Anmeldung : **20.04.83 Patentblatt 83/16**

(45) Bekanntmachung des Hinweises auf die Patenterteilung : **24.04.85 Patentblatt 85/17**

(84) Benannte Vertragsstaaten : **CH DE FR GB IT LI**

(56) Entgegenhaltungen : **DE-A- 1 939 466**
**Die Akte enthält technische Angaben, die nach dem Eingang der Anmeldung eingereicht wurden und die nicht in dieser Patentschrift enthalten sind.**

(73) Patentinhaber : **HOECHST AKTIENGESELLSCHAFT**
**Postfach 80 03 20**
**D-6230 Frankfurt am Main 80 (DE)**

(72) Erfinder : **Hunger, Klaus, Dr.**
**Johann-Strauss-Strasse 35**
**D-6233 Kelkheim (Taunus) (DE)**

**EP 0 077 025 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Herstellung der Azoverbindung der Formel I

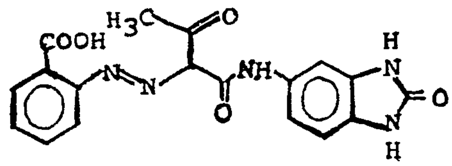

(I)

ist aus der DE-PS 19 39 466 bekannt. Hierbei wird die Kupplungsreaktion insbesonders im wäßrigen Medium vorgenommen, gegebenenfalls in Gegenwart von Dispergiermitteln z. B. nicht-ionogener Natur. Zur Erzielung einer besonders günstigen Kristallstruktur wird es als zweckmäßig angesehen, das Kupplungsgemisch einige Zeit zu erhitzen, beispielsweise zum Kochen. Weitere Angaben über die einzusetzenden Dispergiermittel fehlen aber in der genannten Veröffentlichung.

Überraschenderweise wurde nun gefunden, daß man eine wertvolle pigmentäre Form dieser Azoverbindung in besonders einfacher Weise erhält, wenn die Kupplung im wäßrigen Medium in Gegenwart eines Oxethylierungsproduktes eines langkettigen Alkohols erfolgt und die wäßrige Pigmentsuspension nach beendeter Kupplung erhitzt wird.

Die Erfindung betrifft somit ein Verfahren zur Herstellung einer pigmentären Form der Azoverbindung der Formel I durch Kuppeln von diazotierter Anthranilsäure auf 5-Acetoacetyl-aminobenzimidazolon im wäßrigen Medium und thermische Nachbehandlung, das dadurch gekennzeichnet ist, daß die Kupplung in Gegenwart eines Oxethylierungsproduktes eines Alkohols oder Alkoholgemisches mit 8 bis 14 Kohlenstoffatomen und 3 bis 10 Mol Ethylenoxid erfolgt und die wäßrige Pigmentsuspension nach beendeter Kupplung erhitzt wird. Hierbei wird das Pigment in einer anwendungstechnisch wertvollen Form erhalten, die mit der nach Beispiel 1 der DE-PS 19 39 466 erhaltenen vergleichbar ist.

Im folgenden werden bevorzugte Ausgestaltungen der Erfindung näher erläutert:

Das Oxethylierungsprodukt wird vorteilhaft der sauren, insbesondere essig- oder mineralsauren, Fällungslösung für die Kupplungskomponente zugesetzt. Die Menge des zugesetzten Oxethylats beträgt vorteilhaft 2 bis 15 %, insbesondere 6 bis 10 %, bezogen auf das Pigmentgewicht. Besonders bevorzugt sind Umsetzungsprodukte aliphatischer Alkohole oder Alkoholgemische mit 9 bis 13 Kohlenstoffatomen mit 5 bis 8 Mol Ethylenoxid. In Betracht kommen Alkohole aus der Oxosynthese, beispielsweise sterisch modifizierte Synthesealkohole wie Isotridecanol, das mit 6 bis 8 Mol Ethylenoxid umgesetzt wurde, oder ein Alkoholgemisch mit im wesentlichen 9 bis 11 Kohlenstoffatomen, das mit 5 Mol Ethylenoxid umgesetzt wurde.

Nach beendeter Kupplung wird die Pigmentsuspension etwa 1 bis 8, insbesondere 2 bis 4, Stunden auf Temperaturen von 92 bis 100 °C, insbesondere 95 bis 98 °C, erhitzt. Anschließend wird das Pigment aus der Suspension isoliert, salzfrei gewaschen und getrocknet.

Das erfindungsgemäß erhaltene Pigment eignet sich zur Herstellung von Druckfarben, zum Pigmentieren von Kunststoffen, natürlichen und synthetischen Harzen und Kautschuken, insbesondere aber zur Herstellung von Lacken und Dispersionsanstrichfarben. Das Pigment ist ferner zum Pigmentdruck auf Textilfasermaterialien und anderen flächenförmigen Gebilden, aber auch zur Spinnfärbung von Viskose, Celluloseestern bzw. -ethern, Polyamiden, Polyurethanen, Polyglykolterephthalaten oder Polyacralnitril geeignet.

Wird entsprechend dem erfindungsgemäßen Verfahren gearbeitet, das Oxethylierungsprodukt des langkettigen Alkohols jedoch nicht zugesetzt, so erhält man des Pigment nur in einer trüben und wenig farbstarken Qualität mit ungenügender Fließfähigkeit und Dispergierbarkeit, d. h. in einer für die Anwendung wenig geeigneten Form.

In den folgenden Beispielen beziehen sich Prozentangaben auf das Gewicht, wenn nichts anderes angegeben ist.

## Beispiel 1

13,7 g Anthranilsäure wurden mit 250 ml Wasser und 50 ml 5N Salzsäure verrührt und mit 20 ml 5N Natriumnitritlösung diazotiert. Diese Diazolösung ließ man bei 25 °C unter Rühren zu einer essigsauren Suspension der Kupplungskomponente fließen, die wie folgt hergestellt wurde:

24 g 5-Acetoacetylamino-benzimidazolon wurden bei Raumtemperatur mit 200 ml Wasser verrührt und durch Zugabe von 60 ml 5N Natronlauge gelöst. Diese Lösung wurde mit Aktivkohle geklärt und das Filtrat in etwa 30 Minuten unter Rühren in eine Lösung aus 30 ml Wasser, 41 ml Eisessig, 80 ml 5N Natronlauge und 3 g eines Umsetzungproduktes aus einem Mol eines technischen Alkanolschnitts mit im wesentlichen 9 bis 11 Kohlenstoffatomen und 5 Mol Ethylenoxid eintropfen gelassen.

Nach beendeter Kupplung wurde die Suspension durch Einleiten von Dampf auf 95 bis 97 °C erhitzt und 3 Stunden bei dieser Temperatur gehalten. Die Suspension wurde bei 60 bis 70 °C filtriert, der Preßkuchen salzfrei gewaschen, getrocknet und gemahlen.

Das erhaltene Pigment wies dieselben guten anwendungstechnischen Eigenschaften auf wie ein nach Beispiel 1 der DE-PS 19 39 466 hergestelltes Produkt.

Vergleichsbeispiel

Man verfuhr entsprechend Beispiel 1, jedoch ohne das Oxethylierungsprodukt zuzusetzen. Man erhielt so ein trübes, rotstichiger-gelbes Pigment mit verringerter Farbstärke, geringem Deckvermögen, schlechter Dispergierbarkeit und zu hoher Viskosität im Lack.

Beispiel 2

In eine Mischung von 260 ml 31 %iger Salzsäure und 2 750 ml Wasser wurden 137 g Anthranilsäure eingetragen. Die gerührte Lösung wurde auf 3 °C abgekühlt und innerhalb von 10-15 Minuten mit 131 ml 40 %iger wäßriger Natriumnitritlösung diazotiert. Man rührte 30 Minuten bei 10 °C mit Nitritüberschuß nach, gab 15 g Kieselgur als Klärhilfsmittel zu, zerstörte den Überschuß an Nitrit mit etwa 1 g Amidosulfonsäure und klärte die Diazoniumsalzlösung.

In eine Mischung von 800 ml Wasser, 200 g Eis, 116 ml Eisessig und 30 g eines Oxethylierungsproduktes aus einem $C_{13}$-Alkoholgemisch mit 6 Mol Ethylenoxid ließ man während 30 Minuten eine Lösung aus 2 000 ml Wasser, 180 ml 33 %iger Natronlauge und 240 g 5-Acetoacetylamino-benzimidazolon einfließen. Die Suspension der Kupplungskomponente wurde mit 150 g Calciumcarbonat versetzt und auf 35 °C erwärmt. Bei dieser Temperatur ließ man die Diazoniumsalzlösung innerhalb von 2 Stunden unter die Oberfläche der 5-Acetoacetylaminobenzimidazolon-Suspension zutropfen.

Nach dem Auskuppeln wurde durch langsamen Zulauf von 368 ml 33 %iger Salzsäure innerhalb von 45 Minuten der pH-Wert auf 2 gestellt. Dann wurde der Ansatz durch Einleiten von Dampf auf 95 °C erhitzt und 2 Stunden bei dieser Temperatur gehalten.

Nach Abkühlen auf 70 °C wurde filtriert, mit Wasser salzfrei gewaschen und bei 70 °C im Umluftschrank getrocknet.

Man erhielt ein brillantes grünstichiges Gelbpigment mit guter Farbstärke, hohem Deckvermögen, guter Dispergierbarkeit, guter Fließfähigkeit und hohem Glanz im Lack.

Beispiel 3

Man verfuhr entsprechend Beispiel 2, setzte jedoch als Oxalkylierungsprodukt ein analoges Produkt mit 8 Mol Ethylenoxidgehalt ein. Man erhielt so ein Pigment, das die in den Beispielen 1 und 2 beschriebenen anwendungstechnischen Eigenschaften zeigte.

**Patentansprüche**

1. Verfahren zur Herstellung einer pigmentären Form der Azoverbindung der Formel I

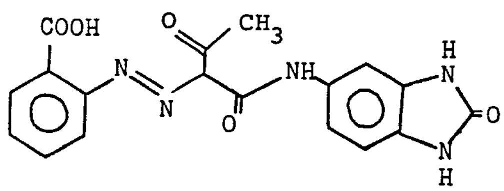

durch Kuppeln von diazotierter Anthranilsäure auf 5-Acetoacetylamino-benzimidazolon in wäßrigem Medium und thermische Nachbehandlung, dadurch gekennzeichnet, daß in Gegenwart eines Oxethylierungsproduktes aus einem Alkohol oder Alkoholgemisch mit 8 bis 14 Kohlenstoffatomen und 3 bis 10 Mol Ethylenoxid gekuppelt und die wäßrige Pigmentsuspension nach beendeter Kupplung erhitzt wird.

2. Verfahren nach Anspruch 1, dadurch gekennzeichnet, daß als Oxethylierungsprodukt ein Umsetzungsprodukt eines aliphatischen Alkohols oder Alkoholgemisches mit 9 bis 13 Kohlenstoffatomen und 5 bis 8 Mol Ethylenoxid verwendet wird.

3. Verfahren nach Anspruch 1 oder 2, dadurch gekennzeichnet, daß 2 bis 15 % des Oxethylierungsproduktes, bezogen auf das Pigmentgewicht, eingesetzt werden.

4. Verfahren nach einem oder mehreren der Ansprüche 1 bis 3, dadurch gekennzeichnet, daß 6 bis 10 % des Oxethylierungsproduktes, bezogen auf das Pigmentgewicht, eingesetzt werden.

5. Verfahren nach einem oder mehreren der Ansprüche 1 bis 4, dadurch gekennzeichnet, daß das Oxethylierungsprodukt zur sauren Fällungslösung für die Kupplungskomponente zugegeben wird.

6. Verfahren nach einem oder mehreren der Ansprüche 1 bis 5, dadurch gekennzeichnet, daß die wäßrige Pigmentsuspension auf 92 bis 100 °C erhitzt wird.

7. Verfahren nach einem oder mehreren der Ansprüche 1 bis 6, dadurch gekennzeichnet, daß die Pigmentsuspension auf 95 bis 98 °C erhitzt wird.

8. Verfahren nach einem oder mehreren der Ansprüche 1 bis 7, dadurch gekennzeichnet, daß man die wäßrige Pigmentsuspension 1 bis 8 Stunden erhitzt.

9. Verfahren nach einem oder mehreren der Ansprüche 1 bis 8, dadurch gekennzeichnet, daß man die wäßrige Pigmentsuspension 2 bis 4 Stunden erhitzt.

10. Pigmentäre Form der Azoverbindung der Formel I gemäß Anspruch 1, dadurch gekennzeichnet, daß sie nach einem der Verfahren gemäß Anspruch 1 bis 9 erhalten wurde.

**Claims**

1. A process for the manufacture of a pigment form of the azo compound of the formula I

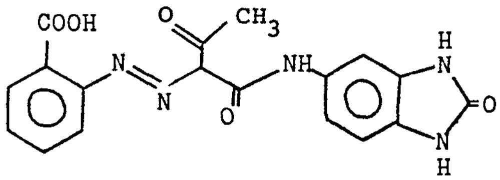

(I)

by coupling of diazotized anthranilic acid onto 5-acetoacetylamino-benzimidazolone in an aqueous medium followed by a thermal after-treatment, characterized by coupling in the presence of an oxethylation product of an alcohol or alcohol mixture having from 8 to 14 carbon atoms and 3 to 10 mols of ethylene oxide, and heating the aqueous pigment suspension after the coupling is complete.

2. The process as claimed in Claim 1, characterized by using as oxethylation product a reaction product of an aliphatic alcohol or alcohol mixture having from 9 to 13 carbon atoms with 5 to 8 mols of ethylene oxide.

3. The process as claimed in Claims 1 or 2, characterized by using from 2 to 15 % of the oxethylation product, relative to the pigment weight.

4. The process as claimed in any or several of the Claims 1 to 3, characterized by using from 6 to 10 % of the oxethylation product, relative to the pigment weight.

5. The process as claimed in any or several of the Claims 1 to 4, characterized by adding the oxethylation product to the acid solution for precipitating the coupling component.

6. The process as claimed in any or several of the Claims 1 to 5, characterized by heating the aqueous pigment suspension to 92 to 100 °C.

7. The process as claimed in any or several of the Claims 1 to 6, characterized by heating the coupling suspension to 95 to 98 °C.

8. The process as claimed in any or several of the Claims 1 to 7, characterized by heating the aqueous suspension for 1 to 8 hours.

9. The process as claimed in any or several of the Claims 1 to 8, characterized by heating the aqueous suspension for 2 to 4 hours.

10. Pigment form of the azo compound of the formula I of Claim 1, characterized by obtaining the pigment from according to one of the processes as claimed in Claims 1 to 9.

**Revendications**

1. Procédé pour préparer une forme pigmentaire du composé azoïque de formule I

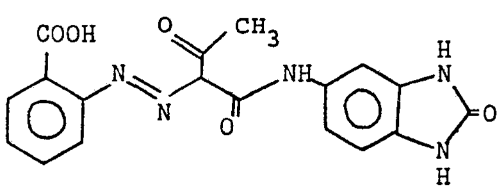

par copulation du diazoïque de l'acide anthranilique sur l'acéto-acétylamino-5 benzimidazolone en milieu aqueux, puis traitement par la chaleur, procédé caractérisé en ce qu'on copule en présence d'un produit d'éthoxylation d'un alcool contenant de 8 à 14 atomes de carbone, ou d'un mélange d'alcools de ce genre, qui renferme de 3 à 10 mol d'oxyde d'éthylène, et, lorsque la copulation est terminée, on chauffe la suspension aqueuse du pigment.

2. Procédé selon la revendication 1, caractérisé en ce qu'on utilise, comme produit d'éthoxylation, un produit résultant de la réaction d'un alcool aliphatique contenant de 9 à 13 atomes de carbone, ou d'un mélange de tels alcools, avec de 5 à 8 mol d'oxyde d'éthylène.

3. Procédé selon l'une des revendications 1 et 2, caractérisé en ce qu'on utilise de 2 à 15 % du produit d'éthoxylation par rapport au poids du pigment.

4. Procédé selon l'une quelconque des revendications 1 à 3, caractérisé en ce qu'on utilise de 6 à 10 % du produit d'éthoxylation par rapport au poids du pigment.

5. Procédé selon l'une quelconque des revendications 1 à 4, caractérisé en ce qu'on ajoute le produit d'éthoxylation à la solution acide de précipitation pour le copulant.

6. Procédé selon l'une quelconque des revendications 1 à 5, caractérisé en ce qu'on chauffe la suspension aqueuse du pigment à une température de 92 à 100 °C.

7. Procédé selon l'une quelconque des revendications 1 à 6, caractérisé en ce qu'on chauffe la suspension du pigment à une température de 95 à 98 °C.

8. Procédé selon l'une quelconque des revendications 1 à 7, caractérisé en ce qu'on chauffe la suspension aqueuse du pigment pendant 1 à 8 heures.

9. Procédé selon l'une quelconque des revendications 1 à 8, caractérisé en ce qu'on chauffe la suspension aqueuse du pigment pendant 2 à 4 heures.

10. Forme pigmentaire du composé azoïque de formule I selon la revendication 1, caractérisée en ce qu'elle a été obtenue par un procédé selon l'une quelconque des revendications 1 à 9.